(19) Europäisches Patentamt
European Patent Office
Office européen des brevets

(11) **EP 3 392 225 B1**

(12) **EUROPEAN PATENT SPECIFICATION**

(45) Date of publication and mention
of the grant of the patent:
**19.02.2020 Bulletin 2020/08**

(51) Int Cl.:
**C04B 35/634** (2006.01)    **C04B 35/626** (2006.01)
**C04B 38/06** (2006.01)    **C08F 261/12** (2006.01)

(21) Application number: **16875794.6**

(86) International application number:
**PCT/JP2016/087603**

(22) Date of filing: **16.12.2016**

(87) International publication number:
**WO 2017/104820 (22.06.2017 Gazette 2017/25)**

(54) **BINDER FOR PRODUCTION OF INORGANIC SINTERED BODY**

BINDEMITTEL ZUR HERSTELLUNG EINES ANORGANISCHEN SINTERKÖRPERS

LIANT POUR LA PRODUCTION D'UN CORPS FRITTÉ INORGANIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **18.12.2015 JP 2015247792**

(43) Date of publication of application:
**24.10.2018 Bulletin 2018/43**

(73) Proprietor: **Sekisui Chemical Co., Ltd.
Osaka-shi, Osaka 530-0047 (JP)**

(72) Inventor: **NAGAI, Yasuharu
Mishima-gun
Osaka 618-0021 (JP)**

(74) Representative: **Cabinet Beau de Loménie
158, rue de l'Université
75340 Paris Cedex 07 (FR)**

(56) References cited:
**WO-A1-2006/100806      WO-A1-2006/100806
WO-A1-2014/156214      WO-A1-2014/156214
JP-A- H06 237 054      JP-A- 2001 172 553
JP-A- 2004 331 413      JP-A- 2013 121 906**

EP 3 392 225 B1

**Description**

TECHNICAL FIELD

The present invention relates to a binder for producing an inorganic sintered body having excellent thermal decomposability and capable of providing, especially when used as a binder for a ceramic green sheet, a ceramic green sheet that has sufficient mechanical strength and flexibility, is less likely to absorb moisture, and can maintain its excellent sheet properties over a long period of time. The present invention also relates to a paste for producing an inorganic sintered body and a ceramic green molded article each produced using the binder for producing an inorganic sintered body.

BACKGROUND ART

A widely employed method for producing various inorganic sintered bodies includes the steps of mixing inorganic powder (e.g., alumina, silica, zirconia, mullite, silicon carbide, silicon nitride, and barium titanate) with a binder (e.g., various thermoplastic resins and organic compounds) to provide a green molded article, and firing the molded article to sinter the inorganic powder while decomposing and scattering the binder.

Meanwhile, along with the recent trend toward miniaturization of electronic devices, ceramic products have been also desired to be miniaturized.

For example, in the case of a layered ceramic capacitor, ceramic powder having a smaller particle size (e.g., particle size of 500 nm or smaller) than that of conventional ceramic powder is used and 200 or more sheets of the resulting thin green sheets (e.g., 5 μm or less in thickness) are laminated in a currently tried method for producing a layered ceramic capacitor.

A binder used in such a ceramic green sheet is desired to show higher performance than ever in the effect of increasing the strength of a ceramic green sheet to be produced and in thermal decomposability upon firing.

Moreover, as described above, for extremely thin ceramic green sheets, it is important to avoid a change in physical properties over time.

To achieve this, for example, Patent Literature 1 discloses a method for producing a green sheet excellent in mechanical strength by using a polyvinyl acetal resin having a degree of polymerization within a certain range blended with a phthalate ester plasticizer and a glycol plasticizer and/or an amino alcohol plasticizer.

However, in a case where a polyvinyl acetal is used alone as a binder resin, the resulting binder has poor thermal decomposability though it provides high sheet strength. Therefore, the binder may fail to be decomposed and burned off to be left as residual carbide in a sintered body or may be rapidly decomposed and scattered in the sintering step to cause cracking, warping, or swelling.

An extremely thin ceramic green sheet is thin in the thickness direction and has a large surface area for its volume, which tends to cause volatilization of a plasticizer from the surface. As a result, the physical properties (e.g., flexibility, sheet strength) of the obtained ceramic green sheet are changed to cause cracking in the process of handling the green sheet.

The use of an acrylic resin, which has excellent thermal decomposability, is also considered. In this case, though the amount of residual carbide after firing is reduced, a ceramic green sheet produced using an acrylic resin as a binder does not have sufficient strength or flexibility. As a result, in the process of drying the green sheet or in other subsequent processes, the green sheet unfortunately tends to have cracks.

To overcome the above situation, Patent Literature 2 discloses, as a binder that provides excellent sheet strength and flexibility, an acrylic binder having specifically defined resin characteristics (e.g., average molecular weight, acid value, glass transition temperature), for example.

Patent Literature 3 and Patent Literature 4 individually disclose the use of an acrylic binder containing a phthalate ester or the like as a plasticizer for the purpose of producing a ceramic green sheet with flexibility.

Even in a case where the binder and the ceramic green sheet disclosed in the above literatures are used, when a thin ceramic green sheet having a thickness of 5 μm or less is to be produced, sufficient sheet strength or flexibility may not be achieved, problematically leading to damage of the ceramic green sheet upon peeling or punching.

In addition, volatilization of a plasticizer from the ceramic green sheet causes a change in physical properties of the ceramic green sheet.

Patent Literature 5 discloses a binder for producing an inorganic sintered body containing a graft copolymer having a unit including polyvinyl butyral and a unit including a poly(meth)acrylic compound, the poly(meth) acrylic compound having a glass transition temperature of 0 to 110 °C.

CITATION LIST

- Patent Literature

Patent Literature 1: JP 3739237 B
Patent Literature 2: JP H06-237054 A
Patent Literature 3: JP H05-194019 A
Patent Literature 4: JP H09-169569 A
Patent Literature 5: WO 2014156214 A1

A binder for manufacturing an inorganic sintered body of WO 2014/156214 A1 contains a graft copolymer that has a unit comprising polyvinyl butyral, and a unit comprising a poly(meth)acrylic acid, the polyvinyl butyral having a degree of polymerization of 800 to 5000, a hydroxyl content of 20 to 40 mol%, and a degree of butyralization of 60 to 80 mol%, and the glass transition temperature of the unit comprising a poly(meth)acrylic acid being 0 to 110°C.

SUMMARY OF INVENTION

- Technical Problem

The present invention aims to provide a binder for producing an inorganic sintered body having excellent thermal decomposability and capable of providing, especially when used as a binder for a ceramic green sheet, a ceramic green sheet that has sufficient mechanical strength and flexibility, is less likely to absorb moisture, and can maintain its excellent sheet properties over a long period of time. The present invention also aims to provide a paste for producing an inorganic sintered body and a ceramic green molded article each obtained using the binder for producing an inorganic sintered body.

- Solution to problem

The present invention relates to the binder for producing an inorganic sintered body of claim 1.
The present invention is specifically described in the following.
The present inventors found out that a graft copolymer of polyvinyl butyral and a poly(meth)acrylic compound each having a specific structure, when used as a binder for forming an inorganic sintered body, has excellent thermal decomposability and, especially when used as a binder for a ceramic green sheet, enables production of a ceramic green molded article that has sufficient mechanical strength and flexibility, is less likely to absorb moisture, and maintains excellent sheet properties over a long period of time. The present invention was thus completed.
The binder for producing an inorganic sintered body of the present invention contains a graft copolymer having a unit including polyvinyl butyral and a unit including a poly(meth)acrylic compound (hereafter, also simply referred to as a graft copolymer).
In the present invention, the "unit including polyvinyl butyral" and the "unit including a poly(meth)acrylic compound" refer to "polyvinyl butyral" and "a poly(meth)acrylic compound", respectively, present in the graft copolymer.
The graft copolymer having a unit including polyvinyl butyral and a unit including a poly(meth)acrylic compound refers to a branched copolymer in which one of a "unit including polyvinyl butyral" and a "unit including a poly(meth)acrylic compound" constituting the main chain is combined with the other unit of the "unit including polyvinyl butyral" and the "unit including a poly(meth)acrylic compound" constituting a side chain.
Because of containing a graft copolymer, the graft copolymer having a unit including polyvinyl butyral and a unit including a poly(meth)acrylic compound enables production of a green sheet having high sheet strength when used as a binder for a ceramic green sheet.
As the binder used is a graft copolymer, a part having a polyvinyl butyral structure and a part having a poly(meth)acrylic compound structure are present uniformly in the binder resin without macroscopic phase separation. As a result, the binder can exhibit its performance (e.g., flexibility, thermal decomposability) sufficiently and enables maintenance of excellent sheet properties over a long period of time.
Moreover, because of being a graft copolymer, the binder is less likely to cause an increase in the viscosity when converted into slurry, which advantageously avoids the use of an excessive amount of an organic solvent, ensures favorable workability upon preparation, and gives slurry for a ceramic green sheet having excellent coating properties.
The structure of the graft copolymer having a unit including polyvinyl butyral and a unit including a poly(meth)acrylic compound is designed in accordance with the use thereof. Examples of the structure include a case where a unit including polyvinyl butyral forms a trunk and a unit including a poly(meth)acrylic compound forms a branch, a case where a unit including a poly(meth)acrylic compound forms a trunk and a unit including polyvinyl butyral forms a branch, a case where polymers having the former structure and polymers having the latter structure are both present, and a case where the above structures are both present in a single polymer.

The molecular weight of the graft copolymer is not particularly limited, and the number average molecular weight (Mn) is preferably 10,000 to 400,000, the weight average molecular weight (Mw) is preferably 20,000 to 800,000, and the ratio thereof (Mw/Mn) is preferably 2.0 to 40. In a case where the Mn, Mw, and Mw/Mn are within these ranges, the use of the graft copolymer as a binder for a ceramic green sheet can attain the sheet strength and the flexibility in balanced manner. Moreover, such a graft copolymer is preferable because the slurry viscosity is prevented from being too high and the dispersibility of inorganic powder is favorable to enable production of a uniform ceramic green sheet.

The lower limit of the degree of polymerization of the unit including polyvinyl butyral (hereafter, also referred to as a polyvinyl butyral unit) is 800 and the upper limit thereof is 5,000. When the degree of polymerization of the polyvinyl butyral unit is less than 800, a ceramic green sheet to be obtained may have poor sheet strength and is likely to suffer cracks or damage. When the degree of polymerization is more than 5,000, a ceramic green sheet to be obtained may have excessively high hardness, leading to reduction not only in the flexibility but also in the adhesiveness. This may cause an adhesion defect such as interlayer peeling in the step of lamination by heat-pressing.

When such a polymer is converted into slurry, the slurry may have too high a viscosity, which lowers the dispersibility of ceramic powder. In addition, the slurry applied to a support body may form uneven coating, failing to provide a uniform ceramic green sheet. The lower limit of the degree of polymerization is preferably 1,000 and the upper limit thereof is preferably 3,500.

The polyvinyl butyral unit has a vinyl acetate unit, a vinyl alcohol unit, and a vinyl butyral unit, which are commonly included in polyvinyl butyral.

In the polyvinyl butyral unit, the lower limit of the amount of the vinyl alcohol unit (hydroxy group content) is 20 mol% and the upper limit thereof is 40 mol%. When the hydroxy group content is less than 20 mol%, a green sheet to be obtained has too strong flexibility, leading to poor peelability from the support body. Moreover, a sheet to be obtained may have poor strength, or the dispersibility of ceramic powder may be lowered. When the hydroxy group content is more than 40 mol%, the hardness is increased due to hydrogen bonding. In such a case, a ceramic green sheet to be obtained cannot have sufficient flexibility. Moreover, when such a polymer is converted into slurry, the slurry may have too high a viscosity and form uneven coating upon application thereof to a support body, failing to provide a uniform ceramic green sheet. The lower limit of the hydroxy group content is preferably 25 mol% and the upper limit thereof is preferably 35 mol%.

In the polyvinyl butyral unit, the lower limit of the amount of the vinyl butyral unit (degree of butyralization) is 60 mol% and the upper limit thereof is 80 mol%. When the amount of the vinyl butyral unit is less than 60 mol%, a ceramic green sheet to be obtained cannot have sufficient flexibility. Moreover, when such a polymer is converted into slurry, the slurry may have too high a viscosity and form uneven coating upon application thereof to a support body, failing to provide a uniform ceramic green sheet. When the amount of the vinyl butyral unit is more than 80 mol%, a sheet to be obtained has poor strength. The lower limit of the amount of the vinyl butyral unit is preferably 65 mol% and the upper limit thereof is preferably 75 mol%.

The amount of the vinyl acetate unit (acetyl group content) in the polyvinyl butyral unit is not particularly limited, and is preferably 30 mol% or less in consideration of the sheet strength in a case where such a polymer is used as a raw material of a ceramic green sheet. When the amount of the vinyl acetate unit is more than 30 mol%, the glass transition temperature of the polyvinyl butyral unit is lowered and the flexibility of a green sheet to be obtained becomes too high. Such a green sheet has poor handleability.

The amount of the polyvinyl butyral unit in the graft copolymer is not particularly limited as it is designed in accordance with the use thereof. The amount is preferably 10 to 90% by weight based on the total amount of the graft copolymer. When the amount of the polyvinyl butyral unit is less than 10% by weight, a ceramic green sheet to be obtained may have poor sheet strength and fail to have sufficient flexibility. When the amount of the polyvinyl butyral unit is more than 90% by weight, the decomposability during firing is lowered to increase the residual carbide in the ceramic, possibly lowering the electrical characteristics of a ceramic capacitor to be obtained.

The lower limit of the amount of the polyvinyl butyral unit is more preferably 20% by weight and the upper limit thereof is more preferably 80% by weight. The lower limit is particularly preferably 30% by weight and the upper limit is particularly preferably 70% by weight.

The unit including a poly(meth)acrylic compound (hereafter, also referred to as a poly(meth)acrylic compound unit) is obtainable by polymerization of a (meth)acrylic compound that is a monomer.

In the present invention, a "(meth)acrylic compound" refers to at least one selected from the group consisting of (meth)acrylic acid esters and (meth)acrylic acids.

The (meth)acrylic acid ester, one of the (meth)acrylic compound, is not particularly limited as long as the resulting poly(meth)acrylic compound unit has a glass transition temperature of -65°C or higher and lower than 0°C. Preferably, the (meth)acrylic acid ester contains at least one selected from the group consisting of monofunctional (meth)acrylic acid alkyl esters, monofunctional cyclic (meth)acrylic acid alkyl esters, and monofunctional (meth)acrylic acid aryl esters.

The (meth)acrylic compound contains 90% by weight or more of a methacrylic compound, and particularly preferably contains 90% by weight or more of a monofunctional methacrylic acid ester. With this structure, when a graft copolymer having a unit including such a (meth)acrylic compound is used for a binder for a ceramic green sheet, the resulting binder has higher decomposability upon firing to leave less residual carbide. Moreover, slurry prepared from such a polymer may have an appropriate viscosity.

Examples of the monofunctional (meth)acrylic acid alkyl esters include methyl (meth)acrylate, ethyl (meth)acrylate, n-propyl (meth)acrylate, isopropyl (meth)acrylate, n-butyl (meth)acrylate, isobutyl (meth)acrylate, t-butyl (meth)acrylate, n-octyl (meth)acrylate, isooctyl (meth)acrylate, 2-ethylhexyl (meth)acrylate, nonyl (meth)acrylate, isononyl (meth)acrylate, decyl (meth)acrylate, isodecyl (meth)acrylate, lauryl (meth)acrylate, stearyl (meth)acrylate, isotetradecyl (meth)acrylate, and 2-isocyanatoethyl methacrylate.

For the purpose of setting the glass transition temperature to -65°C or higher and lower than 0°C, the monofunctional (meth)acrylic acid alkyl ester preferably contains a monofunctional (meth)acrylic acid alkyl ester having 8 or more carbon atoms in a side chain in an amount of preferably 50% by weight or more, more preferably 55% by weight or more, still more preferably 60% by weight or more.

This structure lowers the glass transition temperature of the poly(meth)acrylic compound unit and further allows the resulting binder to be excellent in decomposability upon firing when used as a binder for a ceramic green sheet. Moreover, since such a binder has lower moisture absorbability, the binder is less likely to absorb moisture and allows maintenance of excellent sheet properties over a long period of time when used as a binder for a ceramic green sheet.

Examples of the monofunctional (meth)acrylic acid alkyl esters having eight or more carbon atoms in a side chain include n-octyl (meth)acrylate, isooctyl (meth)acrylate, 2-ethylhexyl (meth)acrylate, nonyl (meth)acrylate, isononyl (meth)acrylate, decyl (meth)acrylate, isodecyl (meth)acrylate, lauryl (meth)acrylate, stearyl (meth)acrylate, and isotetradecyl (meth)acrylate.

Preferred among these are 2-ethylhexyl (meth)acrylate, isodecyl (meth)acrylate, and lauryl (meth)acrylate as the glass transition temperature of the poly(meth)acrylic compound unit can be set to -65°C or higher and lower than 0°C.

Examples of the monofunctional cyclic (meth)acrylic acid alkyl esters include cyclohexyl (meth)acrylate and isobornyl (meth)acrylate.

Examples of the monofunctional (meth)acrylic acid aryl esters include phenyl (meth)acrylate and benzyl (meth)acrylate.

The (meth)acrylic acid as used herein collectively refers to acrylic acid and methacrylic acid and the (meth)acrylate collectively refers to acrylate and methacrylate.

One (meth)acrylic compound may be used alone or two or more (meth)acrylic compounds may be used in combination as long as the glass transition temperature of the poly(meth)acrylic compound unit is set to -65°C or higher and lower than 0°C.

In a case where two or more (meth)acrylic compounds are used in combination, as an exemplary method for setting the glass transition temperature of the poly(meth)acrylic compound unit to -65°C or higher and lower than 0°C, the (meth)acrylic compound may be selected in such a manner as to satisfy the following inequality (1):

$$0.003663 < W1/Tg1 + W2/Tg2 + \cdots \leq 0.004808 \quad (1)$$

wherein W1, W2·· refer to mass fractions of (meth)acrylic compound 1, (meth)acrylic compound 2, ·· included in the poly(meth)acrylic compound unit; W1 + W2 + ·· = 1 is satisfied; and

Tg1, Tg2·· refer to glass transition temperatures (°K) of homopolymers of (meth)acrylic compound 1, (meth)acrylic compound 2, ·· included in the poly(meth)acrylic compound unit.

The (meth)acrylic compound may contain a (meth)acrylic compound having, in a molecule, at least one polar group selected from the group consisting of a carboxyl group, a hydroxy group, an amide group, an amino group, an epoxy group, and an ether group. The (meth)acrylic compound containing such a (meth)acrylic compound having a polar group enables preparation of a binder excellent in dispersibility of inorganic fine particles.

Specific examples thereof include (meth)acrylic acid, 2-hydroxyethyl (meth)acrylate, 3-hydroxypropyl (meth)acrylate, 4-hydroxybutyl (meth)acrylate, (meth)acrylamide, aminoethyl (meth)acrylate, dimethylaminoethyl (meth)acrylate, diethylaminoethyl (meth)acrylate, glycidyl (meth)acrylate, and (meth)acrylic acid esters having a polyethylene glycol chain in an ester side chain such as methoxytriethylene glycol methacrylate.

In particular, containing a (meth)acrylic compound having a carboxyl group or a hydroxy group in a molecule can increase the intramolecular and intermolecular interactions in the graft copolymer. In such a case, when a binder containing the graft copolymer is used for producing a ceramic green sheet, the resulting sheet has high sheet strength.

Moreover, containing a (meth)acrylic compound having a carboxyl group, a hydroxy group, an epoxy group, or an ether group in a molecule increases the oxygen content of the binder, and such a binder shows an excellently low residual carbon ratio. The (meth)acrylic compound included in the poly(meth)acrylic compound preferably contains 3 to 50% by weight of a (meth)acrylic compound having a carboxyl group, a hydroxy group, an epoxy group, or an ether group in a molecule.

The glass transition temperature of the poly(meth)acrylic compound unit is -65°C or higher and lower than 0°C.

With the glass transition temperature within the above range, when a graft copolymer having such a unit is used for a binder for a ceramic green sheet, a ceramic green sheet having sufficient mechanical strength and flexibility can be obtained. Moreover, since the residual stress upon formation of a ceramic green sheet can be reduced, excellent sheet properties can be maintained over a long period of time. In a case where the binder for producing an inorganic sintered body of the present invention is used as a binder for a ceramic green sheet, degradation of the sheet properties along with volatilization of a plasticizer can be avoided because no plasticizer is used or the amount of the plasticizer can be reduced.

When the poly(meth)acrylic compound unit has a glass transition temperature of lower than -65°C, in a case where a graft copolymer having such a unit is used for a binder for a ceramic green sheet, the resulting green sheet has very high flexibility, failing to have enough sheet strength. Moreover, the green sheet is stretched/shrunk upon processing, which possibly interferes with the dimensional accuracy. Moreover, since the difference in the glass transition temperature between the poly(meth)acrylic compound unit and the polyvinyl acetal unit increases too much, physical properties cannot be uniform.

In contrast, when the poly(meth)acrylic compound unit has a glass transition temperature of 0°C or higher, a green sheet to be obtained has lower plasticity, resulting in poor adhesiveness upon heat-pressing and poor processability throughout the entire process.

The lower limit of the glass transition temperature of the poly(meth)acrylic compound unit is preferably -55°C and the upper limit thereof is preferably -5°C.

The glass transition temperature of the poly(meth)acrylic compound unit can be measured by excluding the glass transition temperature derived from the polyvinyl butyral unit, which is estimated from the glass transition temperature of the homopolymer, upon differential scanning calorimetry of the graft copolymer.

The difference between the glass transition temperature of the poly(meth)acrylic compound unit and the glass transition temperature of the polyvinyl butyral unit is 60°C to 140°C, more preferably 75°C to 115°C.

With the difference within the above range, the unit having a lower glass transition temperature can release the stress, and when such a graft copolymer is used for a binder for a ceramic green sheet, sufficient flexibility can be imparted.

Moreover, since the stress during the punching process or heat-pressing after the lamination can be effectively absorbed, cracking in the ceramic green sheet can be effectively reduced.

The graft copolymer has an average glass transition temperature obtained using the following equation (2) of preferably -30°C to 50°C. With the average glass transition temperature within the above range, when the graft copolymer is used for a binder for a ceramic green sheet, the sheet strength and the flexibility can be achieved in a balanced manner.

The lower limit of the average glass transition temperature is more preferably -15°C and the upper limit thereof is more preferably 35°C.

```
Average glass transition temperature = {(Glass
transition temperature of the unit including polyvinyl
butyral) × (Content rate of the unit including polyvinyl
butyral in the graft copolymer)} + {(Glass transition
temperature of the unit including a poly(meth)acrylic
compound) × (Content rate of the unit including a
poly(meth)acrylic compound in the graft copolymer)}    (2)
```

The amount of the poly(meth)acrylic compound unit in the graft copolymer is determined in accordance with the use of the binder and is not particularly limited. The amount is preferably 10 to 90% by weight based on the total amount of the graft copolymer. When the amount of the poly(meth)acrylic compound unit is less than 10% by weight, decomposability upon firing is lowered to increase the residual carbide contained in the ceramic. In such a case, a ceramic capacitor to be obtained may have lower electrical characteristics. In contrast, when the amount of the poly(meth)acrylic compound unit is more than 90% by weight, a ceramic green sheet to be obtained may have lowered sheet strength or drastic decomposition may occur upon firing to provide a defective inorganic sintered body sheet having fissures or cracks formed along with volume shrinkage. In such a case, the electrical characteristics of the resulting ceramic capacitor may be lowered. The lower limit of the amount is preferably 20% by weight and the upper limit thereof is preferably 80% by weight. The lower limit is more preferably 30% by weight and the upper limit is more preferably 70% by weight.

The graft ratio (ratio of the unit including a poly(meth)acrylic compound to the unit including polyvinyl butyral in the graft copolymer) of the graft copolymer is determined in accordance with the use of the binder and is not particularly limited. The graft ratio is preferably 10 to 900% by weight. With the graft ratio within the above range, when the graft copolymer is used for a binder for a ceramic green sheet, all of the thermal decomposability of the binder upon firing, sheet strength, and flexibility are achieved.

In the present invention, the term "graft ratio" refers to a ratio of the unit including a poly(meth)acrylic compound to the unit including polyvinyl butyral in the graft copolymer, and is evaluated by the following method. The obtained resin solution is dried at 110°C for one hour and then dissolved in xylene. An insoluble matter and a soluble matter thereof were separated. Here, the insoluble matter is a graft copolymer. The weights of the unit including polyvinyl butyral and the unit including a poly(meth)acrylic compound of the resulting graft copolymer are obtained by NMR. Based on the result, the graft ratio is calculated using the following equation (3).

```
Graft ratio (%) = {(Weight of the unit including a
poly(meth)acrylic compound)/(weight of the unit including
polyvinyl butyral)} × 100    (3)
```

The graft copolymer may further have a unit including a different monomer.

The graft copolymer having a unit including a different monomer increases the intermolecular interactions therein. The use of the graft copolymer for a binder enables formation of a ceramic green sheet having high sheet strength. Moreover, in a case where the different monomer has a polar group, the polar group interacts, for example, forms a hydrogen bond, with the surface of inorganic powder to increase the dispersibility of the inorganic powder in the resulting slurry. As a result, even in a case where no dispersant is used, a uniform ceramic green sheet can be formed. Moreover, in a case where the different monomer has a functional group selected from the group consisting of a hydroxy group, a carboxyl group, an epoxy group, and an ether group, the oxygen content of the binder increases to generate a radical that is effective for thermal decomposition. This assists firing of the binder, so that a green sheet to be obtained contains little residual carbide.

The different monomer is not particularly limited and is preferably a monomer having at least one polar group selected from the group consisting of a carboxyl group, a hydroxy group, an amide group, an amino group, an epoxy group, and an ether group and one olefinic double bond in a molecule. Examples of such a monomer include crotonic acid, maleic acid, fumaric acid, citraconic acid, mesaconic acid, itaconic acid, allyl alcohol, vinyl ether, and allylamine. Among these, more preferred are a monomer having a carboxyl group in a molecule and a monomer having a hydroxy group in a molecule because, when a binder containing the resulting graft copolymer is used for producing a ceramic green sheet, the sheet strength thereof is further enhanced.

The amount of the unit including a different monomer in the graft copolymer is determined in accordance with the use of the binder and is not particularly limited. The amount is preferably 20% by weight or less, more preferably 10% by weight or less, still more preferably 5% by weight or less based on the total amount of the graft copolymer.

The method of producing the graft copolymer is not particularly limited, and an exemplary method includes the step of radically polymerizing a mixed monomer containing the (meth)acrylic compound in the presence of a polymerization initiator in an environment where polyvinyl butyral is present.

The polymerization method is not particularly limited, and a conventionally known method may be employed such as solution polymerization, emulsion polymerization, suspension polymerization, or bulk polymerization.

A solvent used in the solution polymerization is not particularly limited, and examples thereof include ethyl acetate, toluene, dimethyl sulfoxide, ethanol, acetone, diethyl ether, tetrahydrofuran, and a mixed solvent of these.

An exemplary specific operation method for producing the graft copolymer is a solution polymerization method that includes the steps of placing polyvinyl butyral resin and a solvent in a polymerization vessel equipped with a temperature controller and a stirrer, dissolving the polyvinyl butyral by heating and stirring, adding a monomer containing the (meth)acrylic compound, substituting the air inside the polymerization vessel with nitrogen, and adding a radical polymerization initiator, thereby polymerizing the (meth)acrylic compound.

Another exemplary method is a suspension polymerization method that includes the steps of placing polyvinyl butyral resin, a monomer containing a (meth)acrylic compound, pure water, a dispersant, and a radical polymerization initiator in a polymerization vessel equipped with a temperature controller and a stirrer; substituting the air inside the polymerization vessel with nitrogen; swelling the monomer in the polyvinyl butyral resin; and heating the swelled monomer, thereby polymerizing the (meth)acrylic compound.

A still another exemplary method is a bulk polymerization method that includes the steps of placing polyvinyl butyral resin and a monomer containing a (meth)acrylic compound in a polymerization vessel equipped with a temperature controller and a stirrer, dissolving the polyvinyl butyral in the monomer by heating and stirring the contents, substituting the air inside the polymerization vessel with nitrogen, and adding a radical polymerization initiator, thereby polymerizing the (meth)acrylic compound.

In the present invention, the graft copolymer can be favorably produced by using a specific radical polymerization initiator and a specific solvent.

The graft efficiency of the unit including a poly(meth)acrylic compound upon preparation of the graft copolymer is preferably 10% or more, more preferably 20% or more.

With the graft efficiency of less than 10%, the resulting resin is not uniform, unfavorably lowering the strength and flexibility of a ceramic green sheet to be obtained.

In the present invention, the term "graft efficiency" refers to a ratio of the (meth)acrylic compound incorporated in the graft copolymer to the total amount of the added (meth)acrylic compound, and can be evaluated by the following method for example.

The obtained resin solution is dried at 110°C for one hour and then dissolved in xylene. An insoluble matter and a soluble matter thereof are separated. Here, the soluble matter is a homopolymer of a (meth)acrylic compound and the insoluble matter is a graft copolymer.

The weight of the unit including a poly(meth)acrylic compound of the resulting graft copolymer is obtained by NMR. Based on the result, the graft efficiency is calculated using the following equation (4).

```
Graft efficiency (%) = {(Weight of the unit including
a (meth)acrylic compound in the graft copolymer)/[(Weight
of a homopolymer of the (meth)acrylic compound) + (Weight
of the unit including the (meth)acrylic compound in the
graft copolymer)]} × 100    (4)
```

The radical polymerization initiator is not particularly limited, and examples thereof include: organic peroxides such as 1,1-di(t-hexyl peroxy)-3,3,5-trimethyl cyclohexane, t-hexyl peroxyneodecanoate, t-butyl peroxyneodecanoate, t-butyl peroxyneoheptanoate, t-hexyl peroxypivalate, t-butyl peroxypivalate, di(3,5,5,-trimethyl hexanoyl) peroxide, dilauroyl peroxide, 1,1,3,3-tetramethyl butyl peroxy-2-ethylhexanoate, 2,5-dimethyl-2,5-di(2-ethyl hexanoyl peroxy)hexane, t-hexyl peroxy-2-ethylhexanoate, di(4-methyl benzoyl) peroxide, t-butyl peroxy-2-ethylhexanoate, dibenzoyl peroxide, 1,1-di(t-hexyl peroxy)cyclohexane, t-butyl peroxyisobutyrate, t-butyl peroxy-3,5,5-trimethyl hexanoate, t-butyl peroxylaurate, t-butyl peroxy isopropyl monocarbonate, t-hexyl peroxybenzoate, and t-butyl peroxyacetate; and azo compounds such as 2,2'-azobisisobutyronitrile, 2,2'-azobis(2,4-dimethyl valeronitrile), 4,4'-azobis(4-cyanopentanoic acid), 2,2'-azobis(2-methylbutyronitrile), and azobiscyclohexanecarbonitrile.

These radical polymerization initiators may be used alone, or two or more of these may be used in combination.

The binder for producing an inorganic sintered body of the present invention is blended with an organic solvent, inorganic fine particles, a dispersant and the like to give a paste for producing an inorganic sintered body. The present invention also encompasses such a paste for producing an inorganic sintered body.

The use of the binder for producing an inorganic sintered body of the present invention allows the use of no plasticizer or the use of a plasticizer in a significantly smaller amount compared to conventional cases. This can effectively prevent lowering of the sheet properties due to volatilization of a plasticizer in comparison with the case where a plasticizer is used as usual.

The paste for producing an inorganic sintered body of the present invention may contain a pore-forming agent for achieving porosity.

The organic solvent is not particularly limited, and examples thereof include ethyl acetate, toluene, dimethyl sulfoxide, methanol, ethanol, isopropyl alcohol, butanol, acetone, diethyl ether, tetrahydrofuran, and mixed solvents of these. In particular, the use of alcohol even in a small amount lowers the viscosity of the binder to provide a paste excellent in handleability.

Containing an organic solvent having a boiling point of 80°C or higher prevents rapid drying, enabling production of a green sheet with a smooth surface.

The use of the binder for producing an inorganic sintered body of the present invention as a binder for forming a ceramic green sheet enables production of a ceramic green sheet.

The method for producing a ceramic green sheet is not particularly limited, and a known method may be employed. In an exemplary method, the binder for producing an inorganic sintered body of the present invention is optionally blended with additives such as dispersants and defoamers, and mixed with an organic solvent and ceramic powder uniformly using a mixer such as a ball mill to give slurry. The slurry is applied to a support body such as a PET film by a wet process by a known method such as a doctor blade method. Then, the organic solvent is removed by drying. In another method, the slurry is granulated by a spray dryer method, and then molded by a dry pressing method.

Thus obtained ceramic green sheet is optionally subjected to various processing such as punching and then used for production of various ceramic products. For example, in production of a layered ceramic capacitor, a support body to be used is a PET film preliminarily subjected to mold-release treatment. After application of an electrically conductive paste that will serve as an internal electrode to a green sheet by screen printing or the like, the green sheet is peeled from the PET film as a support body and punched to give a piece in a predetermined size. A plurality of such pieces is laminated and heat-pressed to give a laminate, and the binder resin is thermally decomposed to be removed through firing.

- Advantageous Effects of Invention

The present invention can provide a binder for producing an inorganic sintered body having excellent thermal decomposability and capable of providing, especially when used as a binder for a ceramic green sheet, a ceramic green sheet that has sufficient mechanical strength and flexibility, is less likely to absorb moisture, and can maintain its excellent sheet properties over a long period of time. The present invention can also provide a paste for producing an inorganic sintered body and a ceramic green molded article each produced using the binder for producing an inorganic sintered body.

DESCRIPTION OF EMBODIMENTS

Embodiments of the present invention are specifically described with reference to examples, but are not limited only to these examples.

(Example 1)

(1) Preparation of a graft copolymer

A reaction vessel equipped with a thermometer, a stirrer, a nitrogen inlet tube, and a condenser tube was charged with 25 parts by weight of polyvinyl butyral (degree of polymerization: 1,100, degree of butyralization: 68.0 mol%, hydroxy group content: 31.2 mol%, acetyl group content: 0.8 mol%), 23 parts by weight of 2-ethylhexyl methacrylate, 2 parts by weight of 2-hydroxyethyl methacrylate, and 100 parts by weight of ethyl acetate. The contents were stirred so that polyvinyl butyral was dissolved. Next, nitrogen gas was blown into the reaction vessel for 30 minutes so that the air inside was substituted with nitrogen, and the contents in the reaction vessel were heated to 75°C with stirring. Thirty minutes later, a polymerization initiator solution prepared by diluting 0.5 parts by weight of t-hexyl peroxypivalate as a polymerization initiator with 16 parts by weight of ethyl acetate was added dropwise to the reaction vessel over 5 hours. Then, the reaction was allowed to proceed at 75°C for 3 hours.

Next, the reaction solution was cooled to give a graft copolymer solution (solid content of 30% by weight) containing a graft copolymer.

The weight average molecular weight in terms of polystyrene of the obtained graft copolymer was measured by the GPC method using a "2690 Separations Model" (available from Waters) as a column, and was 230,000.

The graft efficiency was 69% and the graft ratio was 69%.

The poly(meth)acrylic compound unit had a glass transition temperature of -6°C. The obtained graft copolymer had an average glass transition temperature of 31°C.

(2) Production of a ceramic green sheet

The obtained graft copolymer solution was diluted with a diluting solvent (mixed solvent of ethanol and toluene, weight ratio (ethanol:toluene) of 1:1) to give a solution having a solid content of 10% by weight. Next, 20 parts by weight of the solution was blended with 20 parts by weight of barium titanate powder (BT-03, average particle size of 0.3 $\mu$m, available from Sakai Chemical Industry Co., Ltd.) as ceramic powder, and mixed using a ball mill for 48 hours to give slurry for a ceramic green sheet.

The obtained slurry for a ceramic green sheet was applied to a PET film preliminarily subjected to mold release treatment, using a coater to a dry thickness of 3 μm. The applied slurry was air-dried at normal temperature for one hour, and dried at 80°C for one hour and then at 120°C for one hour by a hot air dryer, thereby providing a ceramic green sheet.

(Example 2)

A graft copolymer solution (solid content of 30% by weight) containing a graft copolymer was prepared in the same manner as in Example 1, except that, in "(1) Preparation of a graft copolymer" of Example 1, polyvinyl butyral (degree of polymerization: 1,700, degree of butyralization: 68.0 mol%, hydroxy group content: 31.2 mol%, acetyl group content: 0.8 mol%) was used and that 5 parts by weight of 2-ethylhexyl methacrylate, 18 parts by weight of isodecyl methacrylate, and 2 parts by weight of 2-hydroxyethyl methacrylate were used instead of 23 parts by weight of 2-ethylhexyl methacrylate and 2 parts by weight of 2-hydroxyethyl methacrylate.

The weight average molecular weight in terms of polystyrene of the obtained graft copolymer was measured by the GPC method using a "2690 Separations Model" (available from Waters) as a column, and was 260,000.

The graft efficiency was 61% and the graft ratio was 61%.

The poly(meth)acrylic compound unit of the obtained graft copolymer had a glass transition temperature of -29°C. The obtained graft copolymer had an average glass transition temperature of 19°C.

A ceramic green sheet was obtained in the same manner as in "(2) Production of a ceramic green sheet" in Example 1, except that the obtained graft copolymer solution was used.

(Example 3)

A graft copolymer solution (solid content of 30% by weight) containing a graft copolymer was prepared in the same manner as in Example 2, except that, in "(1) Preparation of a graft copolymer" of Example 2, 5 parts by weight of isodecyl methacrylate, 18 parts by weight of n-lauryl methacrylate, and 2 parts by weight of 2-hydroxyethyl methacrylate were used instead of 5 parts by weight of 2-ethylhexyl methacrylate, 18 parts by weight of isodecyl methacrylate, and 2 parts by weight of 2-hydroxyethyl methacrylate.

The weight average molecular weight in terms of polystyrene of the obtained graft copolymer was measured by the GPC method using a "2690 Separations Model" (available from Waters) as a column, and was 270,000.

The graft efficiency was 59% and the graft ratio was 59%.

The (meth)acrylic compound unit of the obtained graft copolymer had a glass transition temperature of -54°C. The obtained graft copolymer had an average glass transition temperature of 7°C.

A ceramic green sheet was obtained in the same manner as in "(2) Production of a ceramic green sheet" in Example 1, except that the obtained graft copolymer solution was used.

(Example 4)

A graft copolymer solution (solid content of 40% by weight) containing a graft copolymer was prepared in the same manner as in Example 1, except that, in "(1) Preparation of a graft copolymer" of Example 1, polyvinyl butyral (degree of polymerization: 4,000, degree of butyralization: 67.9 mol%, hydroxy group content: 30.7 mol%, acetyl group content: 1.4 mol%) was used and that 50 parts by weight of n-lauryl methacrylate and 2 parts by weight of 2-hydroxyethyl methacrylate were used instead of 23 parts by weight of 2-ethylhexyl methacrylate and 2 parts by weight of 2-hydroxyethyl methacrylate.

The weight average molecular weight in terms of polystyrene of the obtained graft copolymer was measured by the GPC method using a "2690 Separations Model" (available from Waters) as a column, and was 500,000.

The graft efficiency was 72% and the graft ratio was 150%.

The (meth)acrylic compound unit of the obtained graft copolymer had a glass transition temperature of -62°C. The obtained graft copolymer had an average glass transition temperature of -20°C.

A ceramic green sheet was obtained in the same manner as in "(2) Production of a ceramic green sheet" in Example 1, except that the obtained graft copolymer solution was used.

(Example 5)

A graft copolymer solution (solid content of 34% by weight) containing a graft copolymer was prepared in the same manner as in Example 1, except that, in "(1) Preparation of a graft copolymer" of Example 1, polyvinyl butyral (degree of polymerization: 800, degree of butyralization: 70.0 mol%, hydroxy group content: 29.0 mol%, acetyl group content: 1.0 mol%) was used and that 10 parts by weight of n-butyl methacrylate, 25 parts by weight of 2-ethylhexyl methacrylate, and 1 part by weight of 2-hydroxyethyl methacrylate were used instead of 23 parts by weight of 2-ethylhexyl methacrylate and 2 parts by weight of 2-hydroxyethyl methacrylate.

The weight average molecular weight in terms of polystyrene of the obtained graft copolymer was measured by the GPC method using a "2690 Separations Model" (available from Waters) as a column, and was 220,000.

The graft efficiency was 69% and the graft ratio was 100%.

The (meth)acrylic compound of the obtained graft copolymer had a glass transition temperature of -1°C. The obtained graft copolymer had an average glass transition temperature of 26°C.

A ceramic green sheet was obtained in the same manner as in "(2) Production of a ceramic green sheet" in Example 1, except that the obtained graft copolymer solution was used.

(Example 6)

A graft copolymer solution (solid content of 30% by weight) containing a graft copolymer was prepared in the same manner as in Example 1, except that, in "(1) Preparation of a graft copolymer" of Example 1, polyvinyl butyral (degree of polymerization: 1,100, degree of butyralization: 67.9 mol%, hydroxy group content: 30.7 mol%, acetyl group content: 1.4 mol%) was used and that 23.5 parts by weight of 2-ethylhexyl methacrylate, 0.5 parts by weight of glycidyl methacrylate, and 1 part by weight of methacrylic acid were used instead of 23 parts by weight of 2-ethylhexyl methacrylate and 2 parts by weight of 2-hydroxyethyl methacrylate.

The weight average molecular weight in terms of polystyrene of the obtained graft copolymer was measured by the GPC method using a "2690 Separations Model" (available from Waters) as a column, and was 230,000.

The graft efficiency was 72% and the graft ratio was 72%.

The (meth)acrylic compound unit of the obtained graft copolymer had a glass transition temperature of -4°C. The obtained graft copolymer had an average glass transition temperature of 31°C.

A ceramic green sheet was obtained in the same manner as in "(2) Production of a ceramic green sheet" in Example 1, except that the obtained graft copolymer solution was used.

(Example 7)

A graft copolymer solution (solid content of 42% by weight) containing a graft copolymer was prepared in the same manner as in Example 1, except that, in "(1) Preparation of a graft copolymer" of Example 1, polyvinyl butyral (degree of polymerization: 1,700, degree of butyralization: 66.1 mol%, hydroxy group content: 32.9 mol%, acetyl group content: 1.0 mol%) was used and that 50 parts by weight of 2-ethylhexyl methacrylate, 5 parts by weight of isodecyl methacrylate, 3 parts by weight of 2-hydroxyethyl methacrylate, 0.5 parts by weight of glycidyl methacrylate, and 1 part by weight of methacrylic acid were used instead of 23 parts by weight of 2-ethylhexyl methacrylate and 2 parts by weight of 2-hydroxyethyl methacrylate.

The weight average molecular weight in terms of polystyrene of the obtained graft copolymer was measured by the GPC method using a "2690 Separations Model" (available from Waters) as a column, and was 360,000.

The graft efficiency was 85% and the graft ratio was 203%.

The (meth)acrylic compound unit of the obtained graft copolymer had a glass transition temperature of -8°C. The obtained graft copolymer had an average glass transition temperature of 15°C.

A ceramic green sheet was obtained in the same manner as in "(2) Production of a ceramic green sheet" in Example 1, except that the obtained graft copolymer solution was used.

(Example 8)

A graft copolymer solution (solid content of 22% by weight) containing a graft copolymer was prepared in the same manner as in Example 1, except that, in "(1) Preparation of a graft copolymer" of Example 1, polyvinyl butyral (degree of polymerization: 1,700, degree of butyralization: 66.5 mol%, hydroxy group content: 32.2 mol%, acetyl group content: 1.3 mol%) was used and that 3 parts by weight of 2-ethylhexyl methacrylate, 3 parts by weight of isodecyl methacrylate, and 2 parts by weight of n-lauryl methacrylate were used instead of 23 parts by weight of 2-ethylhexyl methacrylate and 2 parts by weight of 2-hydroxyethyl methacrylate.

The weight average molecular weight in terms of polystyrene of the obtained graft copolymer was measured by the GPC method using a "2690 Separations Model" (available from Waters) as a column, and was 290,000.

The graft efficiency was 55% and the graft ratio was 18%.

The (meth)acrylic compound unit of the obtained graft copolymer had a glass transition temperature of -37°C. The obtained graft copolymer had an average glass transition temperature of 43°C.

A ceramic green sheet was obtained in the same manner as in "(2) Production of a ceramic green sheet" in Example 1, except that the obtained graft copolymer solution was used and dibutyl phthalate was used as a plasticizer.

(Example 9)

A graft copolymer solution (solid content of 23% by weight) containing a graft copolymer was prepared in the same manner as in Example 1, except that, in "(1) Preparation of a graft copolymer" of Example 1, polyvinyl butyral (degree of polymerization: 1,700, degree of butyralization: 66.1 mol%, hydroxy group content: 32.9 mol%, acetyl group content: 1.0 mol%) was used and that 2 parts by weight of n-butyl methacrylate, 8 parts by weight of 2-ethylhexyl methacrylate, and 0.5 parts by weight of 2-hydroxyethyl methacrylate were used instead of 23 parts by weight of 2-ethylhexyl methacrylate and 2 parts by weight of 2-hydroxyethyl methacrylate.

The weight average molecular weight in terms of polystyrene of the obtained graft copolymer was measured by the GPC method using a "2690 Separations Model" (available from Waters) as a column, and was 280,000.

The graft efficiency was 44% and the graft ratio was 18%.

The (meth)acrylic compound unit of the obtained graft copolymer had a glass transition temperature of -2°C. The obtained graft copolymer had an average glass transition temperature of 48°C.

A ceramic green sheet was obtained in the same manner as in "(2) Production of a ceramic green sheet" in Example 1, except that the obtained graft copolymer solution was used.

(Example 10)

A graft copolymer solution (solid content of 22% by weight) containing a graft copolymer was prepared in the same manner as in Example 1, except that, in "(1) Preparation of a graft copolymer" of Example 1, polyvinyl butyral (degree of polymerization: 1,700, degree of butyralization: 66.1 mol%, hydroxy group content: 32.9 mol%, acetyl group content: 1.0 mol%) was used and that 1 part by weight of n-butyl methacrylate and 7 parts by weight of 2-ethylhexyl methacrylate were used instead of 23 parts by weight of 2-ethylhexyl methacrylate and 2 parts by weight of 2-hydroxyethyl methacrylate.

The weight average molecular weight in terms of polystyrene of the obtained graft copolymer was measured by the GPC method using a "2690 Separations Model" (available from Waters) as a column, and was 260,000.

The graft efficiency was 31% and the graft ratio was 10%.

The (meth)acrylic compound unit of the obtained graft copolymer had a glass transition temperature of -7°C. The obtained graft copolymer had an average glass transition temperature of 51°C.

A ceramic green sheet was obtained in the same manner as in "(2) Production of a ceramic green sheet" in Example 1, except that the obtained graft copolymer solution was used.

(Example 11)

A graft copolymer solution (solid content of 45% by weight) containing a graft copolymer was prepared in the same manner as in Example 1, except that, in "(1) Preparation of a graft copolymer" of Example 1, polyvinyl butyral (degree of polymerization: 800, degree of butyralization: 70.0 mol%, hydroxy group content: 29.0 mol%, acetyl group content: 1.0 mol%) was used and that 2 parts by weight of 2-ethylhexyl methacrylate, 65 parts by weight of n-lauryl methacrylate, and 1 part by weight of 2-hydroxyethyl methacrylate were used instead of 23 parts by weight of 2-ethylhexyl methacrylate and 2 parts by weight of 2-hydroxyethyl methacrylate.

The weight average molecular weight in terms of polystyrene of the obtained graft copolymer was measured by the GPC method using a "2690 Separations Model" (available from Waters) as a column, and was 270,000.

The graft efficiency was 77% and the graft ratio was 210%.

The (meth)acrylic compound unit of the obtained graft copolymer had a glass transition temperature of -63°C. The obtained graft copolymer had an average glass transition temperature of -28°C.

A ceramic green sheet was obtained in the same manner as in "(2) Production of a ceramic green sheet" in Example 1, except that the obtained graft copolymer solution was used.

(Example 12)

A graft copolymer solution (solid content of 46% by weight) containing a graft copolymer was prepared in the same manner as in Example 1, except that, in "(1) Preparation of a graft copolymer" of Example 1, polyvinyl butyral (degree of polymerization: 800, degree of butyralization: 70.0 mol%, hydroxy group content: 29.0 mol%, acetyl group content: 1.0 mol%) was used and that 2 parts by weight of 2-ethylhexyl methacrylate and 73 parts by weight of n-lauryl methacrylate were used instead of 23 parts by weight of 2-ethylhexyl methacrylate and 2 parts by weight of 2-hydroxyethyl methacrylate.

The weight average molecular weight in terms of polystyrene of the obtained graft copolymer was measured by the GPC method using a "2690 Separations Model" (available from Waters) as a column, and was 280,000.

The graft efficiency was 78% and the graft ratio was 233%.

The (meth)acrylic compound unit of the obtained graft copolymer had a glass transition temperature of -64°C. The obtained graft copolymer had an average glass transition temperature of -32°C.

A ceramic green sheet was obtained in the same manner as in "(2) Production of a ceramic green sheet" in Example 1, except that the obtained graft copolymer solution was used.

(Example 13)

A graft copolymer solution (solid content of 37% by weight) containing a graft copolymer was prepared in the same manner as in Example 1, except that, in "(1) Preparation of a graft copolymer" of Example 1, polyvinyl butyral (degree of polymerization: 1,700, degree of butyralization: 66.1 mol%, hydroxy group content: 32.9 mol%, acetyl group content: 1.0 mol%) was used and that 40 parts by weight of n-lauryl methacrylate and 2 parts by weight of 2-hydroxyethyl methacrylate were used instead of 23 parts by weight of 2-ethylhexyl methacrylate and 2 parts by weight of 2-hydroxyethyl methacrylate.

The weight average molecular weight in terms of polystyrene of the obtained graft copolymer was measured by the GPC method using a "2690 Separations Model" (available from Waters) as a column, and was 320,000.

The graft efficiency was 73% and the graft ratio was 123%.

The (meth)acrylic compound unit of the obtained graft copolymer had a glass transition temperature of -61°C. The obtained graft copolymer had an average glass transition temperature of -14°C.

A ceramic green sheet was obtained in the same manner as in "(2) Production of a ceramic green sheet" in Example 1, except that the obtained graft copolymer solution was used.

(Example 14)

A graft copolymer solution (solid content of 24% by weight) containing a graft copolymer was prepared in the same manner as in Example 1, except that, in "(1) Preparation of a graft copolymer" of Example 1, polyvinyl butyral (degree of polymerization: 800, degree of butyralization: 70.0 mol%, hydroxy group content: 29.0 mol%, acetyl group content: 1.0 mol%) was used and that 10 parts by weight of 2-ethylhexyl methacrylate and 2 parts by weight of i-butyl acrylate were used instead of 23 parts by weight of 2-ethylhexyl methacrylate and 2 parts by weight of 2-hydroxyethyl methacrylate.

The weight average molecular weight in terms of polystyrene of the obtained graft copolymer was measured by the GPC method using a "2690 Separations Model" (available from Waters) as a column, and was 200,000.

The graft efficiency was 49% and the graft ratio was 23%.

The (meth)acrylic compound unit of the obtained graft copolymer had a glass transition temperature of -12°C. The obtained graft copolymer had an average glass transition temperature of 39°C.

A ceramic green sheet was obtained in the same manner as in "(2) Production of a ceramic green sheet" in Example 1, except that the obtained graft copolymer solution was used.

(Comparative Example 1)

An amount of 25 parts by weight of polyvinyl butyral (degree of polymerization: 1,100, degree of butyralization: 68.0 mol%, hydroxy group content: 31.2 mol%, acetyl group content: 0.8 mol%) was dissolved in a mixed solvent of ethanol and toluene (ethanol :toluene = 1:1) to a solid content of 10% by weight, thereby preparing a polyvinyl butyral resin solution.

The weight average molecular weight in terms of polystyrene of the obtained polyvinyl butyral was measured by the GPC method using a "2690 Separations Model" (available from Waters) as a column, and was 230,000.

A ceramic green sheet was obtained in the same manner as in "(2) Production of a ceramic green sheet" in Example 1, except that the obtained polyvinyl butyral resin solution was used instead of the graft copolymer solution and 0.4 parts by weight of dioctylphthalate was added as a plasticizer.

(Comparative Example 2)

An amount of 25 parts by weight of polyvinyl butyral (degree of polymerization: 1,100, degree of butyralization: 68.0 mol%, hydroxy group content: 31.2 mol%, acetyl group content: 0.8 mol%) was dissolved in a mixed solvent of ethanol and toluene (ethanol:toluene = 1:1) to a solid content of 10% by weight, thereby preparing a polyvinyl butyral resin solution. The weight average molecular weight in terms of polystyrene of the obtained polyvinyl butyral was measured by the GPC method using a "2690 Separations Model" (available from Waters) as a column, and was 230,000.

A ceramic green sheet was obtained in the same manner as in "(2) Production of a ceramic green sheet" in Example 1, except that the obtained polyvinyl butyral resin solution was used instead of the graft copolymer solution.

(Comparative Example 3)

An amount of 25 parts by weight of poly(2-ethylhexyl methacrylate) (weight average molecular weight: 280,000) was dissolved in a mixed solvent of ethanol and toluene (ethanol:toluene = 1:1) to a solid content of 10% by weight, thereby preparing a poly(2-ethylhexyl methacrylate) solution.

A ceramic green sheet was obtained in the same manner as in "(2) Production of a ceramic green sheet" in Example 1, except that the obtained poly(2-ethylhexyl methacrylate) solution was used instead of the graft copolymer solution.

The poly(2-ethylhexyl methacrylate) had a glass transition temperature of -10°C.

(Comparative Example 4)

A mixture (weight ratio of 1:1) of 25 parts by weight of polyvinyl butyral (degree of polymerization: 1,100, degree of butyralization: 68.0 mol%, hydroxy group content: 31.2 mol%, acetyl group content: 0.8 mol%) and 25 parts by weight of poly(2-ethylhexyl methacrylate) (weight average molecular weight: 280,000) was dissolved in a mixed solvent of ethanol and toluene (ethanol:toluene = 1:1) to a solid content of 10% by weight, thereby preparing a mixed resin solution.

A ceramic green sheet was obtained in the same manner as in "(2) Production of a ceramic green sheet" in Example 1, except that the obtained mixed resin solution was used instead of the graft copolymer solution and 0.4 parts by weight of dioctylphthalate was added as a plasticizer.

(Comparative Example 5)

A reaction vessel equipped with a thermometer, a stirrer, a nitrogen inlet tube, and a condenser tube was charged with 25 parts by weight of polyvinyl butyral having a mercapto group at an end (degree of polymerization: 1,100, degree of butyralization: 68.0 mol%, hydroxy group content: 31.2 mol%, acetyl group content: 0.8 mol%), 2 parts by weight of n-butyl methacrylate, 6 parts by weight of 2-ethylhexyl methacrylate, and 100 parts by weight of ethyl acetate. The contents were stirred so that polyvinyl butyral was dissolved.

Next, nitrogen gas was blown into the reaction vessel for 30 minutes so that the air inside was substituted with nitrogen, and the contents in the reaction vessel were heated to 75°C with stirring.

Thirty minutes later, a polymerization initiator solution obtained by diluting 0.5 parts by weight of AIBN as a polymerization initiator with 16 parts by weight of ethyl acetate was dropwise added to the reaction vessel over five hours.

Then, the reaction was allowed to proceed at 75°C for three hours.

Next, the reaction solution was cooled to give a block copolymer solution (solid content of 20% by weight) containing a block copolymer.

The weight average molecular weight in terms of polystyrene of the obtained block copolymer was measured by GPC method using a "2690 Separations Model" (available from Waters) as a column, and was 350,000.

A ceramic green sheet was obtained in the same manner as in "(2) Production of a ceramic green sheet" in Example 1, except that the obtained block copolymer solution was used and 0.15 parts by weight of dioctylphthalate was further added as a plasticizer.

(Comparative Example 6)

A graft copolymer solution (solid content of 30% by weight) containing a graft copolymer was prepared in the same manner as in Example 1, except that, in "(1) Preparation of a graft copolymer" of Example 1, polyvinyl butyral (degree of polymerization: 1,700, degree of butyralization: 68.0 mol%, hydroxy group content: 30.8 mol%, acetyl group content: 1.2 mol%) was used and that 25 parts by weight of isobornyl methacrylate was used instead of 23 parts by weight of 2-ethylhexyl methacrylate and 2 parts by weight of 2-hydroxyethyl methacrylate.

The weight average molecular weight in terms of polystyrene of the obtained graft copolymer was measured by the GPC method using a "2690 Separations Model" (available from Waters) as a column, and was 250,000.

The graft efficiency was 66% and the graft ratio was 66%.

The poly(meth)acrylic compound unit of the obtained graft copolymer had a glass transition temperature of 180°C. The obtained graft copolymer had an average glass transition temperature of 123°C.

A ceramic green sheet was obtained in the same manner as in "(2) Production of a ceramic green sheet" in Example 1, except that the obtained graft copolymer solution was used.

(Comparative Example 7)

A graft copolymer solution (solid content of 30% by weight) containing a graft copolymer was prepared in the same manner as in Example 1, except that, in "(1) Preparation of a graft copolymer" of Example 1, polyvinyl butyral (degree of polymerization: 800, degree of butyralization: 67.0 mol%, hydroxy group content: 32.0 mol%, acetyl group content: 1.0 mol%) was used and that 25 parts by weight of methacrylic acid was used instead of 23 parts by weight of 2-ethylhexyl methacrylate and 2 parts by weight of 2-hydroxyethyl methacrylate.

The weight average molecular weight in terms of polystyrene of the obtained graft copolymer was measured by the GPC method using a "2690 Separations Model" (available from Waters) as a column, and was 210,000.

The graft efficiency was 69% and the graft ratio was 69%.

The poly(meth)acrylic compound unit of the obtained graft copolymer had a glass transition temperature of 228°C. The obtained graft copolymer had an average glass transition temperature of 148°C.

A ceramic green sheet was obtained in the same manner as in "(2) Production of a ceramic green sheet" in Example 1, except that the obtained graft copolymer solution was used.

(Comparative Example 8)

A graft copolymer solution (solid content of 30% by weight) containing a graft copolymer was prepared in the same manner as in Example 1, except that, in "(1) Preparation of a graft copolymer" of Example 1, polyvinyl butyral (degree of polymerization: 600, degree of butyralization: 80.0 mol%, hydroxy group content: 18.0 mol%, acetyl group content: 2.0 mol%) was used and that 12.5 parts by weight of n-butyl methacrylate and 12.5 parts by weight of 2-ethylhexyl methacrylate were used instead of 23 parts by weight of 2-ethylhexyl methacrylate and 2 parts by weight of 2-hydroxyethyl methacrylate.

The weight average molecular weight in terms of polystyrene of the obtained graft copolymer was measured by the GPC method using a "2690 Separations Model" (available from Waters) as a column, and was 170,000.

The graft efficiency was 69% and the graft ratio was 69%.

The poly(meth)acrylic compound unit of the obtained graft copolymer had a glass transition temperature of 4°C. The obtained graft copolymer had an average glass transition temperature of 32°C.

A ceramic green sheet was obtained in the same manner as in "(2) Production of a ceramic green sheet" in Example 1, except that the obtained graft copolymer solution was used.

(Comparative Example 9)

A graft copolymer solution (solid content of 30% by weight) containing a graft copolymer was prepared in the same manner as in Example 1, except that, in "(1) Preparation of a graft copolymer" of Example 1, polyvinyl butyral (degree of polymerization: 5,300, degree of butyralization: 55.0 mol%, hydroxy group content: 44.0 mol%, acetyl group content: 1.0 mol%) was used and that 25 parts by weight of n-lauryl methacrylate was used instead of 23 parts by weight of 2-ethylhexyl methacrylate and 2 parts by weight of 2-hydroxyethyl methacrylate.

The weight average molecular weight in terms of polystyrene of the obtained graft copolymer was measured by the GPC method using a "2690 Separations Model" (available from Waters) as a column, and was 500,000.

The graft efficiency was 72% and the graft ratio was 72%.

The poly(meth)acrylic compound unit of the obtained graft copolymer had a glass transition temperature of -66°C. The obtained graft copolymer had an average glass transition temperature of 3°C.

A ceramic green sheet was obtained in the same manner as in "(2) Production of a ceramic green sheet" in Example 1, except that the obtained graft copolymer solution was used.

(Evaluation method)

Properties of the obtained resin solutions and ceramic green sheets were evaluated by the following methods. Table 1 shows the results.

(Glass transition temperature of poly(meth)acrylic compound unit)

Each obtained resin solution was dried at 110°C for one hour and then dissolved in xylene. An insoluble matter and a soluble matter thereof were separated. Here, the soluble matter was determined to be a homopolymer of a (meth)acrylic compound and the insoluble matter was determined to be a graft copolymer thereof.

The obtained graft copolymer was subjected to differential scanning calorimetry using a DSC6200 (available from SII) at a rate of temperature rise of 10°C/min.

Out of two measured glass transition temperatures, the glass transition temperature not derived from a polyvinyl acetal unit within a range of 50°C to 70°C was determined to be the glass transition temperature of the poly(meth)acrylic compound unit.

(Evaluation of thermal decomposability)

A film of a binder resin having a thickness of 100 $\mu$m was prepared using each obtained resin solution. The film was heated to 600°C and observed whether or not it was completely decomposed. The thermal decomposability was evaluated based on the following criteria.
○○ (Excellent): Completely decomposed with no residues.
○ (Good): Almost completely decomposed with few residues.
✕ (Poor): Residues were obviously left.

(Evaluation of strength/peeling property)

Each obtained ceramic green sheet was peeled from the polyester film, and the condition thereof was visually observed. The strength/peeling property thereof was evaluated based on the following criteria. The evaluation test was carried out immediately after the preparation of the ceramic green sheet.
○○ (Excellent): Each ceramic green sheet was finely peeled from the polyester film, and the tested ceramic green sheet had no cuts or breaks.
○ (Good): Each ceramic green sheet was finely peeled from the polyester film, and a few of the tested ceramic green sheets had slight cuts.
Δ (Average): Each ceramic green sheet was finely peeled from the polyester film, and nearly half of the tested ceramic green sheets had slight cuts.
✕ (poor): Each ceramic green sheet could not be peeled from the polyester film, or most of the tested ceramic green sheets had cuts or breaks.

(Flexibility)

The central portion of the green sheet was pressed by a glass core rod having a diameter of 2 mm. A 180° bending test was performed in which the green sheet was bended from the pressed central portion. The flexibility of the sheet was evaluated based on the following criteria. The evaluation test was carried out immediately after the preparation of the ceramic green sheet.
○ (Good): No crack was observed.
Δ (Average): Slight cracks were observed.
✕ (Poor): Remarkable cracks were observed.

(Sheet stability)

Each obtained green sheet was left to stand for 10 days, and the strength/peeling property and the flexibility were evaluated as described above. The stability was evaluated based on the following criteria.
○○ (Excellent): The evaluation results of the strength/peeling property and the flexibility were both ○○ or ○.
○ (Good): One of the evaluation results of the strength/peeling property and the flexibility was Δ.
Δ (Average): One of the evaluation results of the strength/peeling property and the flexibility was ✕.
✕ (Poor): The evaluation results of the strength/peeling property and the flexibility were both ✕.

[Table 1] – Part I

| | | | | Example | | | | | | | | | | | | | |
|---|---|---|---|---|---|---|---|---|---|---|---|---|---|---|---|---|---|
| | | | | 1 | 2 | 3 | 4 | 5 | 6 | 7 | 8 | 9 | 10 | 11 | 12 | 13 | 14 |
| Binder resin | Polyvinyl butyral unit | Polyvinyl butyral | Amount (parts by weight) | 25 | 25 | 25 | 25 | 25 | 25 | 25 | 25 | 25 | 25 | 25 | 25 | 25 | 25 |
| | | | Degree of polymerization | 1100 | 1700 | 1700 | 4000 | 800 | 1100 | 1700 | 1700 | 1700 | 1700 | 800 | 800 | 1700 | 800 |
| | | | Degree of butyralization (mol%) | 68 | 68 | 68 | 67.9 | 70 | 67.9 | 66.1 | 66.5 | 66.1 | 66.1 | 70 | 70 | 66.1 | 70 |
| | | | Hydroxyl group content (mol%) | 31.2 | 31.2 | 31.2 | 30.7 | 29 | 30.7 | 32.9 | 32.2 | 32.9 | 32.9 | 29 | 29 | 32.9 | 29 |
| | | Glass transition temperature (°C) | | 67 | 67 | 67 | 66 | 64 | 66 | 68 | 68 | 68 | 68 | 64 | 64 | 68 | 64 |
| | Poly(meth)acrylic compound unit | n-Butyl methacrylate | Amount (parts by weight) | 0 | 0 | 0 | 0 | 10 | 0 | 0 | 0 | 2 | 1 | 0 | 0 | 0 | 0 |
| | | 2-Ethylhexyl methacrylate | Amount (parts by weight) | 23 | 5 | 0 | 0 | 25 | 23.5 | 50 | 3 | 8 | 7 | 2 | 2 | 0 | 10 |
| | | Isodecyl methacrylate | Amount (parts by weight) | 0 | 18 | 5 | 0 | 0 | 0 | 5 | 3 | 0 | 0 | 0 | 0 | 0 | 0 |
| | | n-Lauryl methacrylate | Amount (parts by weight) | 0 | 0 | 18 | 50 | 0 | 0 | 0 | 2 | 0 | 0 | 65 | 73 | 40 | 0 |
| | | 2-Hydroxyethyl methacrylate | Amount (parts by weight) | 2 | 2 | 2 | 2 | 1 | 0 | 3 | 0 | 0.5 | 0 | 1 | 0 | 2 | 0 |
| | | Glycidyl methacrylate | Amount (parts by weight) | 0 | 0 | 0 | 0 | 0 | 0.5 | 0.5 | 0 | 0 | 0 | 0 | 0 | 0 | 0 |
| | | Methacrylic acid | Amount (parts by weight) | 0 | 0 | 0 | 0 | 0 | 1 | 1 | 0 | 0 | 0 | 0 | 0 | 0 | 0 |
| | | Isobornyl methacrylate | Amount (parts by weight) | 0 | 0 | 0 | 0 | 0 | 0 | 0 | 0 | 0 | 0 | 0 | 0 | 0 | 0 |
| | | i-Butyl acrylate | Amount (parts by weight) | 0 | 0 | 0 | 0 | 0 | 0 | 0 | 0 | 0 | 0 | 0 | 0 | 0 | 2 |
| | Glass transition temperature (°C) | | | -6 | -29 | -54 | -62 | -1 | -4 | -8 | -37 | -2 | -7 | -63 | -64 | -61 | -12 |
| | Average glass transition temperature (°C) | | | 31 | 19 | 7 | -20 | 26 | 31 | 15 | 43 | 48 | 51 | -28 | -32 | -14 | 39 |
| Evaluation of resin solution | Weight fraction of polyvinyl butyral unit (%) | | | 59 | 62 | 63 | 40 | 50 | 58 | 33 | 85 | 85 | 91 | 32 | 30 | 45 | 81 |
| | Weight fraction of poly(meth)acrylic compound unit (%) | | | 41 | 38 | 37 | 60 | 50 | 42 | 67 | 15 | 15 | 9 | 68 | 70 | 55 | 19 |
| | Thermal decomposability evaluation | | | ○○ | ○○ | ○○ | ○○ | ○○ | ○○ | ○○ | ○ | ○ | ○ | ○○ | ○○ | ○○ | ○ |
| Evaluation of green sheet | Strength/peeling property evaluation | | | ○○ | ○○ | ○○ | ○ | ○ | ○○ | ○○ | ○ | ○ | ○ | ○ | △ | ○○ | ○ |
| | Flexibility | | | ○ | ○ | ○ | ○ | ○ | ○ | ○ | ○ | ○ | △ | ○ | ○ | ○ | ○ |
| | Sheet stability | | | ○○ | ○○ | ○○ | ○○ | ○○ | ○○ | ○○ | ○ | ○○ | ○ | ○○ | ○ | ○○ | ○○ |
| | Moisture absorbability (%) | | | 0.22 | 0.21 | 0.21 | 0.16 | 0.25 | 0.2 | 0.15 | 0.38 | 0.35 | 0.45 | 0.15 | 0.15 | 0.24 | 0.36 |

*1: Resin mixture
*2: Block copolymer

[Table 1] – Part II

| Binder resin | | | | 1 | 2 | 3 | 4*1 | 5*2 | 6 | 7 | 8 | 9 |
|---|---|---|---|---|---|---|---|---|---|---|---|---|
| | | | | | | | Comparative Example | | | | | |
| Polyvinyl butyral unit | Polyvinyl butyral | | Amount (parts by weight) | 25 | 25 | 0 | 25 | 25 | 25 | 25 | 25 | 25 |
| | | | Degree of polymerization | 1100 | 1100 | – | 1100 | 1100 | 1700 | 800 | 600 | 5300 |
| | | | Degree of butyralization (mol%) | 68 | 68 | – | 68 | 68 | 68 | 67 | 80 | 55 |
| | | | Hydroxyl group content (mol%) | 31.2 | 31.2 | – | 31.2 | 31.2 | 30.8 | 32 | 18 | 44 |
| | | | Glass transition temperature (°C) | 20 | 67 | – | 20 | 50 | 66 | 68 | 59 | 71 |
| | Poly(meth)acrylic compound unit | n-Butyl methacrylate | Amount (parts by weight) | 0 | 0 | 0 | 0 | 2 | 0 | 0 | 12.5 | 0 |
| | | 2-Ethylhexyl methacrylate | Amount (parts by weight) | 0 | 0 | 25 | 25 | 6 | 0 | 0 | 12.5 | 0 |
| | | Isodecyl methacrylate | Amount (parts by weight) | 0 | 0 | 0 | 0 | 0 | 0 | 0 | 0 | 0 |
| | | n-Lauryl methacrylate | Amount (parts by weight) | 0 | 0 | 0 | 0 | 0 | 0 | 0 | 0 | 25 |
| | | 2-Hydroxyethyl methacrylate | Amount (parts by weight) | 0 | 0 | 0 | 0 | 0 | 0 | 0 | 0 | 0 |
| | | Glycidyl methacrylate | Amount (parts by weight) | 0 | 0 | 0 | 0 | 0 | 0 | 0 | 0 | 0 |
| | | Methacrylic acid | Amount (parts by weight) | 0 | 0 | 0 | 0 | 0 | 0 | 25 | 0 | 0 |
| | | Isobornyl methacrylate | Amount (parts by weight) | 0 | 0 | 0 | 0 | 0 | 25 | 0 | 0 | 0 |
| | | i-Butyl acrylate | Amount (parts by weight) | 0 | 0 | 0 | 0 | 0 | 0 | 0 | 0 | 0 |
| | | | Glass transition temperature (°C) | – | – | -10 | – | – | 180 | 228 | 4 | -66 |
| | | | Average glass transition temperature (°C) | – | – | – | – | – | 123 | 148 | 32 | 3 |
| Evaluation of resin solution | | | Weight fraction of polyvinyl butyral unit (%) | – | – | – | – | – | 60 | 59 | 59 | 58 |
| | | | Weight fraction of poly(meth)acrylic compound unit (%) | – | – | – | – | – | 40 | 41 | 41 | 42 |
| | | | Thermal decomposability evaluation | × | × | OO | × | O | O | O | O | O |
| Evaluation of green sheet | | | Strength/peeling property evaluation | OO | × | × | × | O | × | × | × | × |
| | | | Flexibility | O | × | O | O | × | × | × | O | × |
| | | | Sheet stability | △ | × | △ | × | × | × | × | △ | × |
| | | | Moisture absorbability (%) | 0.61 | 0.72 | 0.11 | 0.3 | 0.46 | 0.26 | 6.5 | 0.36 | 0.27 |

Note: A plasticizer is contained in Comparative Examples 1, 4, and 5

*1: Resin mixture
*2: Block copolymer

(Moisture absorbability)

Each obtained green sheet was dried at 110°C for three hours, and allowed to stand still in a constant-temperature and constant-humidity condition at 30°C and 95%RH for three days. Then, the green sheet was taken out and the weight thereof before and after the standing in a constant-temperature and constant-humidity condition was measured to obtain the moisture absorption rate. The moisture absorption rate was calculated using the following equation (5).

```
Moisture absorption rate (%) = {[(Sheet weight before
standing in a constant-temperature and constant-humidity
condition) - (sheet weight after standing in a constant-
temperature and constant-humidity condition)]/ (Sheet
weight before standing in a constant-temperature and
constant-humidity condition)} × 100
```

INDUSTRIAL APPLICABILITY

The present invention can provide a binder for producing an inorganic sintered body having excellent thermal decomposability and capable of providing, especially when used as a binder for a ceramic green sheet, a ceramic green sheet that has sufficient mechanical strength and flexibility, is less likely to absorb moisture, and can maintain its excellent sheet properties over a long period of time. The present invention can also provide a paste for producing an inorganic sintered body and a ceramic green molded article each obtained using the binder for producing an inorganic sintered body.
The binder for producing an inorganic sintered body of the present invention can be also suitably used as a binder for a ceramic green sheet to be used in a fuel cell.

**Claims**

1.  A binder for producing an inorganic sintered body comprising a graft copolymer, the graft copolymer having a unit including polyvinyl butyral and a unit including a poly(meth)acrylic compound,
    the polyvinyl butyral having a degree of polymerization of 800 to 5,000, a hydroxy group content of 20 to 40 mol%, and a degree of butyralization of 60 to 80 mol%,
    the unit including a poly(meth)acrylic compound having a glass transition temperature of -65°C or higher and lower than 0°C,
    the difference between the glass transition temperature of the unit including a poly(meth)acrylic compound and a glass transition temperature of the unit including a polyvinyl butyral being 60°C to 140°C, wherein the glass transition temperatures are measured by subjecting the graft copolymer to differential scanning calorimetry using a DSC6200 (available from SII) at a rate of temperature rise of 10 °C/min and wherein out of two measured glass transition temperatures, the glass transition temperature not derived from a polyvinyl acetal unit within a range of 50°C to 70°C is determined to be the glass transition temperature of the poly(meth)acrylic compound unit.

2.  The binder for producing an inorganic sintered body according to claim 1,
    wherein the graft copolymer having a unit including polyvinyl butyral and a unit including a poly(meth)acrylic compound has an average glass transition temperature obtained using the formula (2) of -30°C to 50°C:

    Average glass transition temperature = {(the glass transition temperature of the unit including polyvinyl butyral) x (Content rate of the unit including polyvinyl butyral in the graft copolymer)} + {(the glass transition temperature of the unit including a poly(meth)acrylic compound) x (Content rate of the unit including a poly(meth)acrylic compound in the graft copolymer)}  (2).

3.  The binder for producing an inorganic sintered body according to claim 1 or 2,
    wherein the graft copolymer having a unit including polyvinyl butyral and a unit including a poly(meth)acrylic compound contains 10 to 90% by weight of the unit including polyvinyl butyral and 10 to 90% by weight of the unit including a poly(meth)acrylic compound.

**4.** The binder for producing an inorganic sintered body according to claim 1, 2, or 3,
wherein the poly(meth)acrylic compound includes a (meth)acrylic compound containing 90% by weight or more of a methacrylic compound.

**5.** The binder for producing an inorganic sintered body according to claim 1, 2, or 3,
wherein the poly(meth)acrylic compound includes a (meth)acrylic compound containing 3 to 50% by weight of a (meth)acrylic compound having a carboxyl group, a hydroxy group, an epoxy group, or an ether group in a molecule.

**6.** A paste for producing an inorganic sintered body comprising:

the binder for producing an inorganic sintered body according to claim 1, 2, 3, 4, or 5;
an organic solvent; and
inorganic fine particles.

**7.** The paste for producing an inorganic sintered body further comprising a pore-forming agent for achieving porosity.

**8.** A ceramic green molded article produced using the paste for producing an inorganic sintered body according to claim 6 or 7.

## Patentansprüche

**1.** Bindemittel zur Herstellung eines anorganischen gesinterten Körpers, das ein Pfropfcopolymer umfasst, wobei das Pfropfcopolymer eine Polyvinylbutyral enthaltende Einheit und eine eine Poly(meth)acrylverbindung enthaltende Einheit aufweist,
wobei das Polyvinylbutyral einen Polymerisationsgrad von 800 bis 5.000, einen Hydroxygruppengehalt von 20 bis 40 Mol-% und einen Butyralisierungsgrad von 60 bis 80 Mol-% aufweist,
wobei die eine Poly(meth)acrylverbindung enthaltende Einheit eine Glasübergangstemperatur von -65 °C oder höher und niedriger als 0 °C aufweist,
wobei die Differenz zwischen der Glasübergangstemperatur der eine Poly(meth)acrylverbindung enthaltenden Einheit und einer Glasübergangstemperatur der Polyvinylbutyral enthaltenden Einheit 60 °C bis 140 °C beträgt,
wobei die Glasüberganstemperaturen dadurch gemessen werden, dass das Pfropfcopolymer unter Verwendung eines DSC6200 (erhältlich von SII) einer Differentialthermoanalyse bei einer Geschwindigkeit des Temperaturanstiegs von 10 °C/min unterzogen wird, und wobei von zwei gemessenen Glasübergangstemperaturen die Glasübergangstemperatur, die innerhalb eines Bereiches von 50 °C bis 70 °C nicht von einer Einheit mit Polyvinylacetal abgeleitet ist, als die Glasübergangstemperatur der Einheit mit der Poly(meth)acrylverbindung bestimmt wird.

**2.** Bindemittel zur Herstellung eines anorganischen gesinterten Körpers nach Anspruch 1,
wobei das Pfropfcopolymer, das eine Polyvinylbutyral enthaltende Einheit und eine eine Poly(meth)acrylverbindung enthaltende Einheit aufweist, eine durchschnittliche Glasübergangstemperatur von -30 °C bis 50 °C aufweist, die mittels der Formel (2) erhalten wird:

$$\text{Durchschnittliche Glasübergangstemperatur} = \{(\text{Glasübergangstemperatur der Polyvinylbutyral enthaltenden Einheit}) \times (\text{Gehalt der Einheit, die in dem Pfropfcopolymer Polyvinylbutyral enthält})\} + \{(\text{Glasübergangstemperatur der eine Poly(meth)acrylverbindung enthaltenden Einheit}) \times (\text{Gehalt der Einheit, die in dem Pfropfcopolymer eine Poly(meth)acrylverbindung enthält})\} \quad (2).$$

**3.** Bindemittel zur Herstellung eines anorganischen gesinterten Körpers nach Anspruch 1 oder 2,
wobei das Pfropfcopolymer das eine Polyvinylbutyral enthaltende Einheit und eine eine Poly(meth)acrylverbindung enthaltende Einheit aufweist, 10 bis 90 Gew.-% der Polyvinylbutyral enthaltenden Einheit und 10 bis 90 Gew.-% der eine Poly(meth)acrylverbindung enthaltenden Einheit enthält.

**4.** Bindemittel zur Herstellung eines anorganischen gesinterten Körpers nach Anspruch 1, 2 oder 3,
wobei die Poly(meth)acrylverbindung eine (Meth)acrylverbindung umfasst, die 90 Gew.-% oder mehr einer Methacrylverbindung enthält.

5. Bindemittel zur Herstellung eines anorganischen gesinterten Körpers nach Anspruch 1, 2 oder 3, wobei die Poly(meth)acrylverbindung eine (Meth)acrylverbindung umfasst, die 3 bis 50 Gew.-% einer (Meth)acrylverbindung enthält, die eine Carboxylgruppe, eine Hydroxygruppe, eine Epoxidgruppe oder eine Ethergruppe in einem Molekül aufweist.

6. Paste zur Herstellung eines anorganischen gesinterten Körpers, umfassend:

   das Bindemittel zur Herstellung eines anorganischen gesinterten Körpers nach Anspruch 1, 2, 3, 4 oder 5, ein organisches Lösungsmittel und anorganische Feinpartikel.

7. Paste zur Herstellung eines anorganischen gesinterten Körpers, ferner umfassend ein porenbildendes Mittel zum Erreichen von Porosität.

8. Keramischer Grünkörper, der unter Verwendung der Paste zur Herstellung eines anorganischen gesinterten Körpers nach Anspruch 6 oder 7 hergestellt ist.

## Revendications

1. Liant pour produire un corps fritté inorganique comprenant un copolymère greffé, le copolymère greffé présentant une unité incluant du polyvinylbutyral et une unité incluant un composé poly(méth)acrylique, le polyvinylbutyral ayant un degré de polymérisation de 800 à 5 000, une teneur en groupe hydroxy de 20 à 40 % en mole, et un degré de butyralisation de 60 à 80 % en mole, l'unité incluant un composé poly(méth)acrylique ayant une température de transition vitreuse de -65°C ou supérieure et inférieure à 0°C, la différence entre la température de transition vitreuse de l'unité incluant un composé poly(méth)acrylique et une température de transition vitreuse de l'unité incluant un polyvinylbutyral étant de 60°C à 140°C, dans lequel les températures de transition vitreuse sont mesurées en soumettant le copolymère greffé à une calorimétrie différentielle utilisant un DSC6200 (disponible chez SII) à une vitesse d'élévation de température de 10°C/min et dans lequel parmi les deux températures de transition vitreuse mesurées, la température de transition vitreuse non dérivée d'une unité polyvinylacétal dans un intervalle de 50°C à 70°C est déterminée comme étant la température de transition vitreuse de l'unité de composé poly(méth)acrylique.

2. Liant pour produire un corps fritté inorganique selon la revendication 1, dans lequel le copolymère greffé présentant une unité incluant du polyvinylbutyral et une unité incluant un composé poly(méth)acrylique présente une température de transition vitreuse moyenne obtenue en utilisant la formule (2) de -30°C à 50°C :

$$\text{température de transition vitreuse moyenne} = \{(\text{la température de transition vitreuse de l'unité incluant du polyvinylbutyral}) \times (\text{taux de teneur de l'unité incluant du polyvinylbutyral dans le copolymère greffé})\} + \{(\text{la température de transition vitreuse de l'unité incluant un composé poly(méth)acrylique}) \times (\text{taux de teneur de l'unité incluant un composé poly(méth)acrylique dans le copolymère greffé})\} \ (2).$$

3. Liant pour la production d'un corps fritté inorganique selon la revendication 1 ou 2, dans lequel le copolymère greffé présentant une unité incluant du polyvinylbutyral et une unité incluant un composé poly(méth)acrylique contient de 10 à 90 % en masse de l'unité incluant du polyvinylbutyral et de 10 à 90 % en masse de l'unité incluant un composé poly(méth)acrylique.

4. Liant pour la production d'un corps fritté inorganique selon la revendication 1, 2, ou 3,

dans lequel le composé poly(méth)acrylique inclut un composé méth(acrylique) contenant 90 % en masse ou plus d'un composé méthacrylique.

**5.** Liant pour la production d'un corps fritté inorganique selon la revendication 1, 2, ou 3, dans lequel le composé poly(méth)acrylique inclut un composé méth(acrylique) contenant de 3 à 50 % en masse d'un composé méth(acrylique) ayant un groupe carboxyle, un groupe hydroxy, un groupe époxy, ou un groupe éther dans une molécule.

**6.** Pâte pour la production d'un corps fritté inorganique comprenant :

le liant pour la production d'un corps fritté inorganique selon la revendication 1, 2, 3, 4, ou 5 ;
un solvant organique ; et
de fines particules inorganiques.

**7.** Pâte pour la production d'un corps fritté inorganique comprenant de plus un agent de formation de pore pour réaliser une porosité.

**8.** Article moulé vert céramique produit en utilisant la pâte pour la production d'un corps fritté inorganique selon la revendication 6 ou 7.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3739237 B
- JP H06237054 A
- JP H05194019 A
- JP H09169569 A
- WO 2014156214 A1